(19) **Europäisches Patentamt**
**European Patent Office**
**Office européen des brevets**

(11) **EP 3 724 605 B1**

(12) # FASCICULE DE BREVET EUROPEEN

(45) Date de publication et mention de la délivrance du brevet:
**27.10.2021 Bulletin 2021/43**

(21) Numéro de dépôt: **18833947.7**

(22) Date de dépôt: **14.12.2018**

(51) Int Cl.:
**G01C 21/16** *(2006.01)* **G01C 21/28** *(2006.01)*
**G01C 21/30** *(2006.01)*

(86) Numéro de dépôt international:
**PCT/FR2018/053312**

(87) Numéro de publication internationale:
**WO 2019/115981 (20.06.2019 Gazette 2019/25)**

(54) **PROCÉDÉ D'ESTIMATION DE DONNÉES DE NAVIGATION D'UN VÉHICULE TERRESTRE UTILISANT DES PARAMÈTRES DE GÉOMÉTRIE ET D'ORIENTATION DE ROUTE**

VERFAHREN ZUR SCHÄTZUNG VON NAVIGATIONSDATEN EINES LANDFAHRZEUGS UNTER VERWENDUNG VON STRASSENGEOMETRIE- UND -ORIENTIERUNGSPARAMETERN

METHOD FOR ESTIMATING NAVIGATION DATA OF A LAND VEHICLE USING ROAD GEOMETRY AND ORIENTATION PARAMETERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2017 FR 1762167**

(43) Date de publication de la demande:
**21.10.2020 Bulletin 2020/43**

(73) Titulaire: **SAFRAN ELECTRONICS & DEFENSE**
**92100 Boulogne Billancourt (FR)**

(72) Inventeurs:
• **DESTELLE, Michel**
**92100 BOULOGNE-BILLANCOURT (FR)**
• **DEMANGE, Jean Luc**
**92100 BOULOGNE-BILLANCOURT (FR)**

(74) Mandataire: **Regimbeau**
**20, rue de Chazelles**
**75847 Paris Cedex 17 (FR)**

(56) Documents cités:
**EP-A2- 1 949 032** **WO-A1-2004/070318**
**US-A1- 2002 099 481** **US-A1- 2017 052 261**

**Description**

**DOMAINE DE L'INVENTION**

La présente invention concerne un procédé et un dispositif d'estimation de données de navigation d'un véhicule terrestre.

**ETAT DE LA TECHNIQUE**

Pour estimer des données de navigation d'un porteur (position, vitesse, attitude), il est connu d'embarquer dans un tel véhicule une centrale inertielle de navigation INS (acronyme de l'expression anglo-saxonne « Inertial Navigation System »).

Aujourd'hui, les données de position d'un porteur sur la base de données inertielles fournies par une centrale inertielle ont une précision, en inertie pure, de l'ordre de 1Nm/h.

Il existe cependant des applications dans lesquelles il est désirable d'obtenir une précision supérieure.

Pour obtenir un tel gain de précision, il a été proposé de combiner les données inertielles produites par une centrale inertielle à une information externe au porteur.

Pour ce faire, on commence par mettre en œuvre des mesures inertielles pour estimer une position du porteur, puis, afin de corriger d'éventuelles erreurs sur cette estimation, on utilise cette information externe, celle-ci étant fournie par un autre système. De tels systèmes de navigation sont ainsi couramment désignés par les termes « systèmes hybrides ».

A titre d'exemple, on connaît des systèmes de ce type dont ladite correction est mise en œuvre à l'aide de données venant d'un système de radio navigation GNSS (information externe). Cependant, un problème connu est que les systèmes de radionavigation ne sont pas exempts d'attaques possibles de brouillage. Dans ce cas, le système de navigation inertielle ne peut plus compter sur les informations GNSS pour se recaler sur la bonne position.

Bien entendu, on connaît des solutions pour remédier à cet inconvénient.

Dans le cas d'un porteur du type véhicule terrestre (par exemple une automobile), l'information externe peut provenir d'un odomètre embarqué dans le véhicule.

On utilise alors une donnée de distance parcourue par le véhicule, fournie par l'odomètre et considérée comme relativement fiable, pour corriger les données de navigation déduites des données inertielles.

Bien qu'un système de ce type réponde dans une certaine mesure aux problèmes posés, notamment pour des véhicules automobiles, il n'en demeure pas moins que son intégration peut présenter des difficultés.

Premièrement, l'adaptation d'un système de ce type au véhicule pose souvent des problèmes, notamment en ce qui concerne une bonne réception du signal émis par l'odomètre. Une telle qualité de réception nécessite par exemple des efforts de conception au niveau des circuits électroniques étant donné la diversité de forme que peuvent avoir les signaux.

Deuxièmement, du fait de contraintes liées à l'environnement du véhicule (déformation du terrain, montée, descente, etc.), le véhicule est amené à se déformer dans différentes directions de l'espace.

Par exemple si on considère une composante de déplacement parallèle à la direction de marche du véhicule, celui-ci peut se déformer selon cette composante (suspensions sollicitées, etc.), ce qui induit une détérioration de la pertinence de la comparaison des mesures odométriques aux mesures inertielles intégrées.

Il existe ainsi d'autres solutions qui permettent d'obtenir une bonne performance de positionnement en l'absence de système de radio navigation ou d'odomètre.

Par exemple, une autre solution, connue sous l'acronyme « ZUPT » pour « Zero velocity Update » consiste à arrêter périodiquement le porteur de façon à ce que les vitesses dans des axes de l'espace soient nulles et utiliser cette information. Cette solution est souvent désignée par l'expression « hybrider à vitesse nulle ». En procédant de la sorte, le système de navigation inertiel est capable d'estimer les erreurs induites par les capteurs et d'améliorer ainsi la performance notamment de position. Cependant, ces arrêts périodiques (toutes les 4 à 10 minutes selon la performance désirée) imposent parfois des contraintes opérationnelles fortes. Par exemple, dans le cas d'un porteur militaire en phase de combat, il peut être délicat de s'arrêter pour mettre en œuvre une hybridation à vitesse nulle.

Pour résoudre ces problèmes, il a été proposé dans le document FR2878954 un procédé d'estimation de données de navigation d'un véhicule terrestre permettant d'atteindre de bonnes performances de positionnement et ce sans avoir recours à un système de radionavigation ou d'odomètre. Ce procédé utilise notamment un modèle cinématique du véhicule, c'est-à-dire un modèle permettant de prédire le comportement du véhicule (comportement sur les manœuvres, comportement en virage, véhicule articulé ou chenillé). Toutefois, un tel modèle cinématique requiert, pour être efficace, d'être particulièrement complexe.

D'autres procédés d'estimation de données de navigation d'un véhicule terrestre ont été proposés dans les documents US 2017/052261 et US 2002/099481.

## EXPOSE DE L'INVENTION

Un but de l'invention est de surmonter les inconvénients mentionnés ci-dessus.

Il est dès lors proposé, selon un premier aspect de l'invention, un procédé d'estimation de données de navigation d'un véhicule terrestre, le procédé comprenant des étapes de :

- réception de données inertielles acquises par un capteur inertiel embarqué dans le véhicule terrestre,
- réception de paramètres relatifs à la géométrie et l'orientation d'une route parcourue par le véhicule terrestre,
- intégration des données inertielles sur la base des paramètres, de sorte à produire des données de navigation du véhicule comprenant au moins un déplacement du véhicule par rapport à la route mesuré parallèlement à une direction, dans lequel le véhicule ne peut se déplacer, parallèlement à la direction, que dans un intervalle borné sans quitter la route,
- estimation d'au moins une erreur qui entache les données de navigation produites, par résolution d'un système d'équations faisant l'hypothèse qu'un écart entre le déplacement calculé et un déplacement de référence associé constitue une erreur de déplacement du véhicule parallèlement à la direction choisie, le déplacement de référence associé au déplacement calculé ayant une valeur inférieure ou égale à la longueur de l'intervalle borné,
- correction des données de navigation produites à partir de l'erreur estimée, de sorte à produire des données de navigation corrigées.

Le procédé selon le premier aspect de l'invention peut comprendre les caractéristiques ou étapes optionnelles suivantes, prises seules ou en combinaison lorsque cela est techniquement possible.

Dans un premier mode de réalisation, les paramètres de la route comprennent une largeur de la route mesurée suivant une direction transversale perpendiculaire à une direction moyenne de circulation d'un véhicule terrestre sur la route. Dans ce cas, les données de navigation du véhicule produites au cours de l'étape d'intégration comprennent un déplacement transversal du véhicule mesuré parallèlement à la direction transversale, et le déplacement de référence associé au déplacement transversal est de valeur inférieure ou égale à la largeur de la route.

Le déplacement de référence associé au déplacement transversal peut être de valeur nulle.

Dans un deuxième mode de réalisation, les données de navigation du véhicule produites au cours de l'étape d'intégration comprennent un déplacement vertical du véhicule mesuré parallèlement à une direction perpendiculaire à une surface de la route, auquel cas le déplacement de référence associé au déplacement vertical est de valeur nulle.

Le premier mode de réalisation, exploitant un déplacement transversal, et le deuxième mode de réalisation, exploitant un déplacement vertical, sont deux solutions alternatives au problème général posé ci-dessus.

Le premier mode de réalisation et le deuxième mode de réalisation peuvent être combinés pour former un troisième mode de réalisation, dans lequel : les deux types de déplacements précités (transversal et vertical) sont calculés, les erreurs correspondantes sont estimés par résolution du système d'équations, lequel fait deux hypothèses (que le déplacement vertical calculé constitue une erreur de déplacement du véhicule parallèlement à la direction verticale, et que l'écart calculé constitue une erreur de déplacement du véhicule parallèlement à la direction transversale).

L'étape d'estimation peut être mise en œuvre par un filtre de Kalman, et le déplacement du véhicule parallèlement à la direction choisie peut être utilisé par le filtre de Kalman comme une donnée d'observation.

Le procédé peut comprendre des étapes de réception de données de radionavigation par satellite, et de corrélation d'image mis en œuvre entre les données de radionavigation par satellite et des données de routes mémorisées par une mémoire embarquée dans le véhicule, de sorte à produire les paramètres relatifs à la géométrie et l'orientation de la route.

Lorsque des données de radionavigation par satellites ne peuvent pas être reçues, l'étape de corrélation peut être mise en œuvre entre des données de navigation corrigées résultant d'une précédente mise en œuvre de l'étape de correction, et les données de route peuvent être mémorisées par la mémoire.

Il est également proposé selon un deuxième aspect de l'invention, un produit programme d'ordinateur comprenant des instructions de code de programme pour l'exécution des étapes du procédé selon le premier aspect de l'invention, lorsque ce procédé est exécuté par au moins un processeur.

Il est également proposé selon un troisième aspect de l'invention un dispositif d'estimation de données de navigation d'un véhicule terrestre, le dispositif comprenant:

- une interface de réception de données inertielles acquises par au moins un capteur inertiel embarqué dans le véhicule terrestre,
- une interface de réception de paramètres relatifs à la géométrie et l'orientation d'une route parcourue par le véhicule terrestre,
- au moins un processeur configuré pour :

o intégrer les données inertielles sur la base des paramètres, de sorte à produire des données de navigation du véhicule comprenant au moins un déplacement du véhicule par rapport à la route mesuré parallèlement à une direction choisie de telle sorte que le véhicule ne peut se déplacer, parallèlement à la direction, que dans un intervalle borné sans quitter la route,

o calculer un écart entre le déplacement calculé et un déplacement de référence associé ayant une valeur comprise dans l'intervalle borné,

o estimer au moins une erreur qui entache les données de navigation produites, par résolution d'un système d'équations faisant l'hypothèse que l'écart calculé constitue une erreur de déplacement du véhicule parallèlement à la direction choisie,

o corriger les données de navigation produites à partie de l'erreur estimée, de sorte à produire des données de navigation corrigées.

Il est également proposé selon un quatrième aspect de l'invention un système destiné à être embarqué dans un véhicule terrestre, comprenant une centrale inertielle comprenant au moins un capteur inertiel, un dispositif selon le troisième aspect de l'invention et agencé pour recevoir des données inertielles générées par la centrale inertielle au moyen du capteur inertiel.

Il est également proposé selon un cinquième aspect de l'invention un système destiné à être embarqué dans un véhicule terrestre, comprenant :

- une mémoire contenant des données de route,
- un récepteur configuré pour acquérir des données de radionavigation par satellite,
- un dispositif de corrélation configuré pour mettre en œuvre une corrélation entre les données de radionavigation par satellite et les données de routes contenues dans la mémoire, de sorte à produire des paramètres relatifs à la géométrie et l'orientation d'une route,
- un dispositif selon le troisième aspect de l'invention, agencé pour recevoir les paramètres produits par le dispositif de corrélation.

Il est également proposé selon un sixième aspect de l'invention un véhicule terrestre comprenant un dispositif selon le troisième aspect de l'invention, ou un système selon le quatrième ou cinquième aspect de l'invention.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- Les figures 1a, 1b, 1c sont des vues respectivement de côté, de face et de dessus d'un véhicule terrestre se déplaçant sur une route.
- La figure 2 représente de manière schématique un système de navigation selon un mode de réalisation de l'invention.
- La figure 3 détaille les étapes d'un procédé mis en œuvre par le système représenté en figure 2, selon un mode de réalisation de l'invention.

Sur l'ensemble des figures, les éléments similaires portent des références identiques.

## DESCRIPTION DETAILLEE DE L'INVENTION

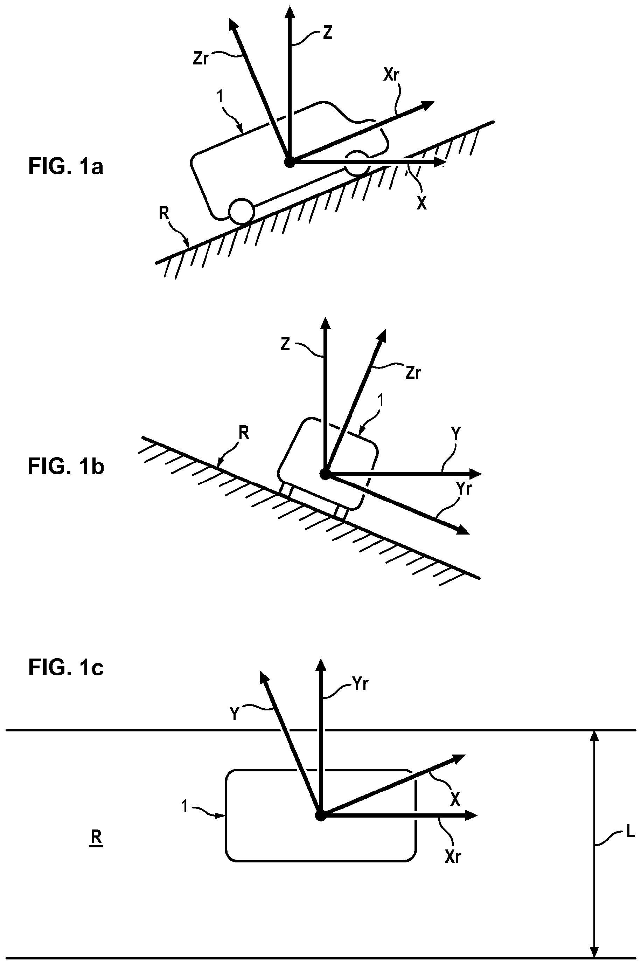

On a représenté sur les **figures 1a à 1c** un véhicule 1 sur une route R ainsi que deux repères : un repère géographique local et un repère de route.

L'origine du repère géographique local est un point prédéterminé du véhicule. Le repère géographique comprend trois axes X, Y, Z :

- l'axe X est un axe horizontal pointant vers le nord géographique de la Terre,
- l'axe Y est un axe horizontal pointant vers l'ouest géographique, et
- l'axe Z est orthogonal aux axes X et Y, et orienté vers le zénith.

Par ailleurs, le repère route comprend trois axes Xr, Yr, Zr :

- l'axe Xr est un axe longitudinal parallèle à une direction de circulation principale d'un véhicule le long de la route,
- l'axe Yr est un axe transversal perpendiculaire à l'axe Xr ; les deux axes Xr et Yr définissant un plan dans lequel s'étend la route,

- l'axe Zr est un axe vertical au plan défini par les axes Xr, Yr, donc perpendiculaire à la surface de la route.

L'origine du repère route est par exemple la même que celle du repère géographique local.

La route présente des paramètres géométriques et d'orientation. Ces paramètres de la route sont généralement bien connus et sont par exemple, en France, soumises à des réglementations devant être prises en compte lors de la conception des routes (voir par exemple le document intitulé « Comprendre les principaux paramètres de conception géométriques des routes », Sétra 2006).

Les paramètres de la route comprennent typiquement :

- un angle de pente longitudinal,
- un angle de dévers ou de pente transversale,
- un angle de cap de la route,
- une largeur de route L.

Les paramètres de route susmentionnés permettent de passer du repère géographique local ou vice-versa.

Les directions respectives des axes Yr et Zr sont particulières. En effet, si l'on prend comme hypothèse que le véhicule se déplace sur la route sans jamais la quitter, alors le déplacement du véhicule parallèlement à l'un des axes Yr et Zr est forcément borné.

En particulier, comme le véhicule terrestre n'est pas capable de voler, le déplacement du véhicule parallèlement à l'axe Zr est censé être nul, ou en moyenne nul si l'on prend en considérations des oscillations du véhicule suivant l'axe Zr causées par d'éventuelles suspensions de ce véhicule.

Par ailleurs, le déplacement du véhicule selon une direction transversale - c'est à dire parallèlement à l'axe Yr - est limité par deux bords latéraux opposés de la route. De la sorte, un déplacement transversal est censé être compris dans un intervalle borné par ces deux bords opposés (cet intervalle est donc de longueur égale à une largeur de la route).

Sur une portion de trajet rectiligne, un véhicule peut opérer notamment des mouvements de caisse qui induisent en temps réel des petits déplacements selon les axes Yr et Zr, cependant, sur la durée nécessaire à parcourir ladite portion de trajet, ces déplacements sont en moyenne nuls, car le véhicule revient toujours vers une position d'équilibre tant selon Yr que selon Zr.

Bien entendu, ceci vaut aussi pour une portion de route en virage ou en pente.

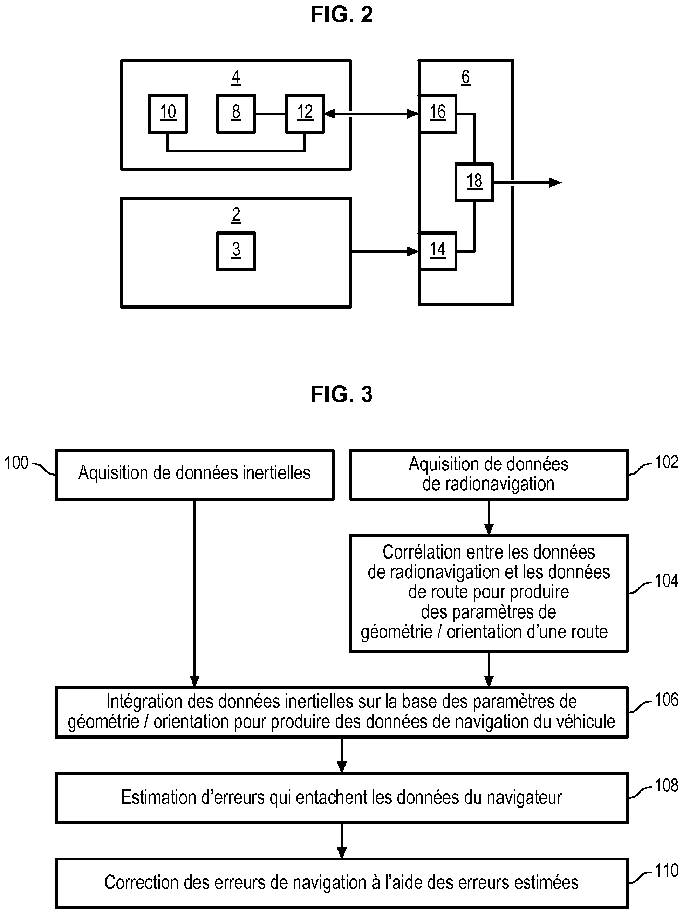

En référence à la **figure 2,** le véhicule 1 comprend un système de navigation comprenant une centrale de navigation inertielle 2.

La centrale de navigation inertielle 2 comprend, de façon connue en elle-même, une pluralité de capteurs inertiels 3, typiquement des gyromètres et des accéléromètres (un seul d'entre eux étant illustré sur la figure 2).

Le système de navigation comprend par ailleurs un système 4 de fourniture de paramètres géométriques et d'orientation de route, et un dispositif de fusion de données 6.

Le système 4 de fourniture de paramètres comprend un récepteur de signaux de radionavigation 8, une mémoire 10 et un dispositif de corrélation 12.

Le récepteur 8 est connu en lui-même. Il comprend une antenne configurée pour recevoir des signaux émis par un ou des satellites (signaux GPS/GNSS typiquement). Le récepteur 8 comprend par ailleurs au moins un processeur configuré pour générer des données de radionavigation sur la base de signaux reçus par l'antenne (typiquement une estimation de position du véhicule), et délivrer ces données au dispositif de corrélation 12.

Par ailleurs, la mémoire 10 contient une base de données de route contenant des informations géométriques des routes d'une zone géographique dans lequel le véhicule est destiné à se déplacer, telle que la route représentée sur les figures 1 à 3.

Les informations mémorisées dans la base de données sont typiquement des paramètres d'équations géométriques (segment de droite, chlotoïdes), ce qui offre l'avantage de consommer peu d'espace mémoire.

Le dispositif de corrélation 12, également connu en lui-même, est configuré pour mettre en œuvre un traitement de corrélation connu en lui-même appelé en anglais « map matching », cette corrélation étant faite entre les données fournies par le récepteur 8 et des données contenues dans la base de données de route stockée dans la mémoire 8.

Le dispositif de fusion 6 comprend par ailleurs une interface 14 apte à recevoir des données de la centrale de navigation inertielle 2, et une interface 16 apte à recevoir des données calculées par le dispositif de corrélation 12 du système de fourniture 4.

Le dispositif de fusion 6 est configuré pour estimer des données de navigation du véhicule (position, vitesse, attitude) sur la base des données qu'il reçoit via ses interfaces.

Le dispositif de fusion comprend typiquement un processeur 18 configuré pour exécuter un programme assurant une telle estimation de données.

Il est à noter que le dispositif de fusion est également apte à transmettre des données au dispositif de corrélation 12. On verra qu'une telle transmission est avantageusement mise en œuvre en absence de réception par le récepteur d'un quelconque signal de radionavigation.

En référence à la **figure 3,** les étapes suivantes sont mises en œuvre par le système de navigation, lorsque le véhicule 1 se déplace sur la route R.

La centrale inertielle 2 acquiert des données inertielles à l'aide de ses capteurs inertiels (étape 100).

La centrale inertielle 2 transmet au dispositif de fusion 6 les données inertielles acquises.

Par ailleurs, le récepteur 8 reçoit des signaux de radionavigations émis par des satellites et génère des données de radionavigation sur la base des signaux reçus.

Le dispositif de corrélation 12 met en œuvre un traitement de corrélation entre les données de radionavigation fournies par le récepteur et des données de route contenues dans la base de données de route mémorisée dans la mémoire 10, de sorte à générer des paramètres relatifs à la géométrie et l'orientation de la route parcourue par le véhicule terrestre (étape 104).

Ces paramètres comprennent notamment la largeur L de la route, voire les angles de dévers, pente et cap susmentionnés.

Le système de fourniture de paramètres 4 transmet les paramètres de géométrie et d'orientation générés au dispositif de fusion 6.

Le dispositif de fusion 6 met en œuvre les étapes suivantes pour estimer des données de navigation du véhicule terrestre 1 (ces données de navigation pouvant par exemple comprendre une position, une vitesse, et une attitude du véhicule dans le repère géographique local).

Le dispositif de fusion 6 intègre les données inertielles sur la base des paramètres reçues du système de fourniture 4, de sorte à produire des données de navigation du véhicule. Le calcul d'intégration est effectué sur un intervalle temporel de durée prédéterminée.

Ces données de navigation du véhicule comprennent au moins un déplacement du véhicule par rapport à la route R mesuré parallèlement à une direction, dans lequel le véhicule ne peut se déplacer, parallèlement à la direction, que dans un intervalle borné sans quitter la route.

Les données de navigation comprennent un déplacement vertical du véhicule par rapport à la route R, c'est-à-dire mesuré parallèlement à l'axe Zr. Comme on l'a dit précédemment, ce déplacement vertical est censé être nul ou en moyenne nul, le véhicule ne pouvant voler.

Ces données de navigation comprennent en outre un déplacement transversal du véhicule par rapport à la route R, c'est-à-dire mesuré parallèlement à l'axe Yr. Ce déplacement transversal est, comme indiqué précédemment, limité par deux bords latéraux opposés de la route R. De la sorte, le déplacement transversal est compris dans un intervalle de longueur égale à la largeur de la route tant le véhicule est sur la route R.

Le dispositif de fusion 6 estime ensuite au moins une erreur qui entache les données de navigation produites au cours de l'étape d'intégration, par résolution d'un système d'équations faisant certaines hypothèses.

Pour au moins un déplacement calculé au cours de l'étape d'intégration, il est fait l'hypothèse par le dispositif de fusion 6 qu'un écart entre le déplacement calculé et un déplacement de référence associé à ce déplacement calculé constitue une erreur de déplacement du véhicule parallèlement à la direction du déplacement considéré. Le déplacement de référence associé au déplacement calculé a une valeur inférieure ou égale à la longueur de l'intervalle borné considéré.

Lorsque les données de navigation produites au cours de l'étape d'intégration 106 comprennent un déplacement vertical et un déplacement transversal, le système d'équations fait deux hypothèses, une pour chaque déplacement calculé.

Le déplacement de référence transversal associé au déplacement transversal calculé a une valeur inférieure ou égale à la largeur de la route. En d'autres termes, le système d'équations fait l'hypothèse que le véhicule ne franchit pas l'un des deux côtés latéraux de la route qu'il parcourt. La valeur du déplacement de référence transversal est par exemple nulle.

Par ailleurs, le déplacement de référence vertical associé au déplacement vertical calculé est nul. En d'autres termes, le système d'équations fait l'hypothèse que le véhicule ne vole pas.

Le dispositif de fusion 6 corrige ensuite les données de navigation produites à l'aide de la ou des erreurs estimées par résolution du système d'équations (étape 110).

Les étapes qui précèdent sont répétées dans le temps, sur la base de nouveaux signaux de radionavigation reçus par le récepteur et/ou de nouvelles données inertielles produites par la centrale de navigation inertielle.

Il se peut que des données de radionavigation par satellites ne puissent pas être reçues (par exemple lorsque le véhicule passe dans tunnel).

Lorsqu'il est détecté une absence de signaux de radionavigation, l'étape de corrélation d'image est mise en œuvre entre des données de navigation corrigées résultant d'une précédente mise en œuvre de l'étape de correction 12, et les données de route mémorisées par la mémoire.

Dans un mode de réalisation, le dispositif de fusion 6 met en œuvre un filtre de Kalman pour estimer les données de navigation du véhicule.

Le fonctionnement d'un filtre de Kalman est connu en soi (son principe est notamment décrit dans le document « Applied Optimal Estimation », The Analytic Sciences Corporation, Ed. Arthur Gelb, 1974). A titre de rappel, un filtre de Kalman estime de manière récursive un état X, se présentant sous la forme d'un vecteur. Le filtre de Kalman a deux phases distinctes : une phase de prédiction, et une phase de mise à jour.

La phase de prédiction prend en entrée un état estimé produit lors d'une itération précédente du filtre, et utilise une matrice de transition pour produire une estimation de l'état, dit état prédit.

Dans l'étape de mise à jour, des observations sont utilisées pour corriger l'état prédit dans le but d'obtenir une estimation plus précise. A cette fin, une matrice d'observation reliant l'état aux observations est utilisée. L'estimation mise à jour est passée en entrée de l'étape de prédiction d'une itération ultérieure du filtre, et ainsi de suite.

En l'espèce, le filtre de Kalman est configuré avec un vecteur d'état X régi par les équations suivantes :

$$\frac{dX}{dt} = f(X, t)$$

$$\frac{d\delta X}{dt} = F . \delta X$$

où f est une fonction non-linéaire, et t désigne le temps. F est par ailleurs la matrice de dynamique du filtre de Kalman. Elle est obtenue par linéarisation de la première équation mentionnant la fonction f. Parmi les composantes du vecteur $\delta X$, on peut trouver : au moins les 3 composantes de l'erreur de position associée par rapport au point de linéarisation, les 3 composantes de l'erreur de vitesse associée par rapport au point de linéarisation et les 3 composantes de l'erreur d'attitude associée par rapport au point de linéarisation.

Le vecteur d'état $\delta X$ est ainsi par exemple le suivant dans un mode de réalisation :

$$\delta X = \begin{bmatrix} \delta Lat \\ \delta G \\ \delta Z \\ \delta Vx \\ \delta Vy \\ \delta Vz \\ \varphi_x \\ \varphi_y \\ \varphi_z \\ \delta b_{xm} \\ \delta b_{ym} \\ \delta b_{zm} \\ \delta d_{xm} \\ \delta d_{ym} \\ \delta d_{zm} \\ \delta de p_{Yr} \\ \delta de p_{Zr} \end{bmatrix}$$

où :

- $\delta Lat$ est une erreur de latitude (rad)
- $\delta G$ est une erreur de longitude (rad)
- $\delta Z$ est une erreur d'altitude (m)
- $\delta Vx$ est une erreur de vitesse suivant l'axe Xg (m/s)
- $SVy$ est une erreur de vitesse suivant l'axe Yg (m/s)
- $\delta Vz$ est une erreur de vitesse suivant l'axe Zg (m/s)
- $\varphi_x$ est une erreur d'attitude suivant l'axe Xg (rad)
- $\varphi_y$ est une erreur d'attitude suivant l'axe Yg (rad)
- $\varphi_z$ est une erreur d'attitude suivant l'axe Zg (rad)
- $\delta b_{xm}$ est une erreur de biais d'accéléromètre suivant l'axe Xm (m/s$^2$)

- $\delta b_{ym}$ est une erreur de biais d'accéléromètre suivant l'axe Ym (m/s$^2$)
- $\delta b_{zm}$ est une erreur de biais d'accéléromètre suivant l'axe Zm (m/s$^2$)
- $\delta d_{xm}$ est une erreur de dérive de gyromètre suivant l'axe Xm (rad/s)
- $\delta d_{ym}$ est une erreur de dérive de gyromètre suivant l'axe Ym (rad/s)
- $\delta d_{zm}$ est une erreur de dérive de gyromètre suivant l'axe Zm (rad/s)
- $\delta dep_{Yr}$ est une erreur de déplacement selon l'axe Yr du repère route (m)
- $\delta dep_{Zr}$ est une erreur de déplacement selon l'axe Zr du repère route (m)

Dans ce cas, la matrice F de transition s'écrit :

$$
F = \begin{bmatrix}
0 & 0 & 0 & \frac{1}{R} & 0 & 0 & 0 & 0 & 0 & 0 & 0 & 0 & 0 & 0 & 0 & 0 \\
0 & 0 & 0 & 0 & -\frac{1}{R\cos Lat} & 0 & 0 & 0 & 0 & 0 & 0 & 0 & 0 & 0 & 0 & 0 \\
0 & 0 & 0 & 0 & 0 & 1 & 0 & 0 & 0 & 0 & 0 & 0 & 0 & 0 & 0 & 0 \\
0 & 0 & 0 & 0 & 2\Omega_t \sin Lat & -2\Omega_t \sin Lat & 0 & -G_0 & sc.fa_{mx} & -cc & sc & 0 & 0 & 0 & 0 & 0 \\
0 & 0 & 0 & -2\Omega_t \sin Lat & 0 & -2\Omega_t \sin Lat & G_0 & 0 & cc.fa_{mx} & sc & cc & 0 & 0 & 0 & 0 & 0 \\
0 & 0 & \frac{2G_0}{R} & 0 & -2\Omega_t \cos Lat & 0 & -sc.fa_{mx} & -cc.fa_{mx} & 0 & 0 & 0 & 1 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & 0 & 0 & 0 & 0 & 0 & 0 & 0 & 0 & 0 & 0 & 0 & 0 & 0 \\
0 & 0 & 0 & -sr & -cr & 0 & 0 & 0 & 0 & 0 & 0 & 0 & 0 & 0 & 0 & 0 \\
0 & 0 & 0 & 0 & 0 & 1 & 0 & 0 & 0 & 0 & 0 & 0 & 0 & 0 & 0 & 0
\end{bmatrix}
$$

où :

- Lat est une latitude du véhicule (rad)
- $fa_{x_m}$ est une force mesurée par un accéléromètre suivant l'axe Xg (m/s$^2$)
- $fa_{y_m}$ est une force mesurée par un accéléromètre suivant l'axe Yg (m/s$^2$)
- $fa_{z_m}$ est une force mesurée par un accéléromètre suivant l'axe Zg (m/s$^2$)
- $\Omega_t$ est une vitesse angulaire de rotation de la Terre (rad/s)
- $G_0$ est une valeur de la pesanteur moyenne (m/s$^2$)
- $cc$ est le cosinus du cap du véhicule
- $sc$ est le sinus du cap du véhicule
- $cr$ est le cosinus du cap de la route
- $sr$ est le sinus du cap de la route
- $R$ est le rayon terrestre

Au cours de l'étape de prédiction, le filtre de Kalman calcule l'état prédit en utilisant la matrice dynamique F.

Le filtre de Kalman utilise par ailleurs, en guise d'observation, le déplacement suivant l'axe Yr et le déplacement suivant l'axe Zr. Dans ce cas, la matrice d'observation H du filtre de Kalman s'écrit :

$$
H = \begin{bmatrix}
0 & 0 & 0 & 0 & 0 & 0 & 0 & 0 & 0 & 0 & 0 & 0 & 0 & 0 & 1 & 0 \\
0 & 0 & 0 & 0 & 0 & 0 & 0 & 0 & 0 & 0 & 0 & 0 & 0 & 0 & 0 & 1
\end{bmatrix}
$$

Est ensuite calculé l'innovation du filtre de Kalman.

L'innovation est, de manière connue en soit, un écart entre des données de référence et des données observées par le filtre.

L'innovation « Inno » est par exemple la suivante :

$$Inno = \begin{bmatrix} 0 \\ 0 \end{bmatrix} - \begin{bmatrix} dep_{yr} \\ dep_{zr} \end{bmatrix}$$

Avec :

$dep_{yr}$ : Déplacement du véhicul e selon l'axe y du repère route
$dep_{zr}$ : Déplacement du véhicule selon l'axe z du repère route

$$\begin{bmatrix} dep_{yr} \\ dep_{zr} \end{bmatrix} = \begin{bmatrix} \int_0^t (-sr.Vx - cr.Vy)dt \\ \int_0^t Vz.dt \end{bmatrix}$$

Dans ce calcul, le vecteur nul à deux composantes est le vecteur de déplacement de référence discutés plus haut. L'innovation du filtre de Kalman correspond donc à un vecteur d'écarts entre un vecteur de déplacements calculés et un vecteur de déplacements de références nuls. L'utilisation de cette innovation par le filtre de Kalman au cours de sa mise en œuvre est illustrative des hypothèses faites, à savoir que le véhicule ne quitte pas la route en se déplacement le long des axes Yr et Zr.

**Revendications**

1. Procédé d'estimation de données de navigation d'un véhicule terrestre, le procédé comprenant des étapes de :

   • réception de données inertielles acquises (100) par un capteur inertiel embarqué dans le véhicule terrestre,
   • réception de paramètres relatifs à la géométrie et l'orientation d'une route parcourue par le véhicule terrestre,
   • intégration (106) des données inertielles sur la base des paramètres, de sorte à produire des données de navigation du véhicule comprenant au moins un déplacement vertical du véhicule mesuré parallèlement à une direction (Zr) perpendiculaire à une surface de la route,
   • estimation (108) d'au moins une erreur qui entache les données de navigation produites, par résolution d'un système d'équations faisant l'hypothèse que le déplacement vertical calculé constitue une erreur de déplacement du véhicule parallèlement à la direction verticale,
   • correction (110) des données de navigation produites à partir de l'erreur estimée, de sorte à produire des données de navigation corrigées.

2. Procédé d'estimation de données de navigation d'un véhicule terrestre, le procédé comprenant des étapes de :

   • réception de données inertielles acquises (100) par un capteur inertiel embarqué dans le véhicule terrestre,
   • réception de paramètres relatifs à la géométrie et l'orientation d'une route parcourue par le véhicule terrestre, les paramètres comprenant une largeur (L) de la route mesurée suivant une direction transversale (Yr) perpendiculaire à une direction moyenne (Xr) de circulation d'un véhicule terrestre sur la route,
   • intégration (106) des données inertielles sur la base des paramètres, de sorte à produire des données de navigation du véhicule comprenant au moins un déplacement transversal du véhicule par rapport à la route mesuré parallèlement à la direction transversale (Yr),
   • calcul d'un écart entre le déplacement transversal calculé et un déplacement de référence associé ayant une valeur prédéterminée inférieure ou égale à la largeur (L) de la route,
   • estimation (108) d'au moins une erreur qui entache les données de navigation produites, par résolution d'un système d'équations faisant l'hypothèse que l'écart calculé constitue une erreur de déplacement du véhicule parallèlement à la direction transversale,
   • correction (110) des données de navigation produites à partir de l'erreur estimée, de sorte à produire des données de navigation corrigées.

3. Procédé selon la revendication 2, dans lequel le déplacement de référence associé au déplacement transversal est de valeur nulle.

**4.** Procédé selon l'une des revendications 1 à 3, dans lequel l'étape d'estimation est mise en œuvre par un filtre de Kalman, et le déplacement du véhicule parallèlement à la direction choisie est utilisée par le filtre de Kalman comme une donnée d'observation.

**5.** Procédé selon l'une des revendications 1 à 4, comprenant des étapes de

- réception (102) de données de radionavigation par satellite,
- corrélation (104) d'image mis en œuvre entre les données de radionavigation par satellite et des données de routes mémorisées par une mémoire embarquée dans le véhicule, de sorte à produire les paramètres relatifs à la géométrie et l'orientation de la route.

**6.** Procédé selon la revendication 5, dans lequel, lorsque des données de radionavigation par satellites ne peuvent pas être reçues, l'étape de corrélation est mise en œuvre entre des données de navigation corrigées résultant d'une précédente mise en œuvre de l'étape de correction, et les données de route mémorisées par la mémoire.

**7.** Produit programme d'ordinateur comprenant des instructions de code de programme pour l'exécution des étapes du procédé selon l'une des revendications 1 à 6, lorsque ce procédé est exécuté par au moins un processeur.

**8.** Dispositif (6) d'estimation de données de navigation d'un véhicule terrestre, le dispositif comprenant:

- une interface (14) de réception de données inertielles acquises par au moins un capteur inertiel embarqué dans le véhicule terrestre,
- une interface (16) de réception de paramètres relatifs à la géométrie et l'orientation d'une route parcourue par le véhicule terrestre,
- au moins un processeur (18) configuré pour :

  ◦ intégrer les données inertielles sur la base des paramètres, de sorte à produire des données de navigation du véhicule comprenant au moins un déplacement vertical du véhicule par rapport à la route mesuré parallèlement à une direction verticale perpendiculaire à une surface de la route,
  ◦ estimer au moins une erreur qui entache les données de navigation produites, par résolution d'un système d'équations faisant l'hypothèse que le déplacement vertical calculé constitue une erreur de déplacement du véhicule parallèlement à la direction verticale,
  ◦ corriger les données de navigation produites à partir de l'erreur estimée, de sorte à produire des données de navigation corrigées.

**9.** Dispositif (6) d'estimation de données de navigation d'un véhicule terrestre, le dispositif comprenant:

- une interface (14) de réception de données inertielles acquises par au moins un capteur inertiel embarqué dans le véhicule terrestre,
- une interface (16) de réception de paramètres relatifs à la géométrie et l'orientation d'une route parcourue par le véhicule terrestre, les paramètres comprenant une largeur (L) de la route mesurée suivant une direction transversale (Yr) perpendiculaire à une direction moyenne (Xr) de circulation d'un véhicule terrestre sur la route,
- au moins un processeur (18) configuré pour :

  ◦ intégrer les données inertielles sur la base des paramètres, de sorte à produire des données de navigation du véhicule comprenant au moins un déplacement transversal du véhicule par rapport à la route mesuré parallèlement à la direction transversale,
  ◦ calculer un écart entre le déplacement transversal calculé et un déplacement de référence associé ayant une valeur prédéterminée inférieure ou égale à la largeur (L) de la route,
  ◦ estimer au moins une erreur qui entache les données de navigation produites, par résolution d'un système d'équations faisant l'hypothèse que l'écart calculé constitue une erreur de déplacement du véhicule parallèlement à la direction transversale,
  ◦ corriger les données de navigation produites à partir de l'erreur estimée, de sorte à produire des données de navigation corrigées.

**10.** Système destiné à être embarqué dans un véhicule terrestre, comprenant :

- une centrale inertielle (2) comprenant au moins un capteur inertiel (3),

• un dispositif (6) selon la revendication 8 ou la revendication 9 agencé pour recevoir des données inertielles générées par la centrale inertielle au moyen du capteur inertiel (3).

11. Système destiné à être embarqué dans un véhicule terrestre, comprenant :

    • une mémoire (8) contenant des données de route,
    • un récepteur configuré pour acquérir des données de radionavigation par satellite,
    • un dispositif de corrélation (12) configuré pour mettre en œuvre une corrélation entre les données de radionavigation par satellite et les données de routes contenues dans la mémoire (8), de sorte à produire des paramètres relatifs à la géométrie et l'orientation d'une route,
    • un dispositif selon la revendication 8 ou la revendication 9 agencé pour recevoir les paramètres produits par le dispositif de corrélation.

12. Véhicule terrestre (1) comprenant un dispositif selon la revendication 9 ou un système selon l'une des revendications 10 et 11.


**Patentansprüche**

1. Verfahren zur Schätzung von Navigationsdaten eines Landfahrzeugs, wobei das Verfahren die folgenden Schritte umfasst:

    • Empfangen von Trägheitsdaten (100), die von einem Trägheitssensor erfasst werden, der in dem Landfahrzeug eingebaut ist,
    • Empfangen von Parametern, die sich auf die Geometrie und die Orientierung einer von dem Landfahrzeug befahrenen Straße beziehen,
    • Integrieren (106) der Trägheitsdaten auf der Basis der Parameter, so dass Navigationsdaten des Fahrzeugs erzeugt werden, die mindestens eine vertikale Bewegung des Fahrzeugs umfassen, gemessen parallel zu einer Richtung (Zr), die senkrecht zu einer Oberfläche der Straße ist,
    • Schätzen (108) mindestens eines Fehlers, der die erzeugten Navigationsdaten verzerrt, durch Lösen eines Gleichungssystems, das die Hypothese aufstellt, dass die berechnete vertikale Bewegung einen Bewegungsfehler des Fahrzeugs parallel zu der vertikalen Richtung darstellt,
    • Korrigieren (110) der erzeugten Navigationsdaten ausgehend von dem geschätzten Fehler, so dass korrigierte Navigationsdaten erzeugt werden.

2. Verfahren zur Schätzung von Navigationsdaten eines Landfahrzeugs, wobei das Verfahren folgende Schritte umfasst:

    • Empfangen von Trägheitsdaten (100), die von einem Trägheitssensor erfasst werden, der in dem Landfahrzeug eingebaut ist,
    • Empfangen von Parametern, die sich auf die Geometrie und die Orientierung einer von dem Landfahrzeug befahrenen Straße beziehen, wobei die Parameter eine Breite (L) der Straße umfassen, gemessen gemäß einer transversalen Richtung (Yr), die senkrecht zu einer mittleren Fahrtrichtung (Xr) eines Landfahrzeugs auf der Straße ist,
    • Integrieren (106) der Trägheitsdaten auf der Basis der Parameter, so dass Navigationsdaten des Fahrzeugs erzeugt werden, die mindestens eine transversale Bewegung des Fahrzeugs in Bezug auf die Straße umfassen, gemessen parallel zu der transversalen Richtung (Yr),
    • Berechnen einer Abweichung zwischen der berechneten transversalen Bewegung und einer zugeordneten Referenzbewegung mit einem vorher festgelegten Wert, der kleiner als oder gleich der Breite (L) der Straße ist,
    • Schätzen (108) mindestens eines Fehlers, der die erzeugten Navigationsdaten verzerrt, durch Lösen eines Gleichungssystems, das die Hypothese aufstellt, dass die berechnete Abweichung einen Bewegungsfehler des Fahrzeugs parallel zu der transversalen Richtung darstellt,
    • Korrigieren (110) der erzeugten Navigationsdaten ausgehend von dem geschätzten Fehler, so dass korrigierte Navigationsdaten erzeugt werden.

3. Verfahren nach Anspruch 2, wobei die der transversalen Bewegung zugeordnete Referenzbewegung den Wert Null hat.

**4.** Verfahren nach einem der Ansprüche 1 bis 3, wobei der Schätzschritt von einem Kalman-Filter durchgeführt wird und die Bewegung des Fahrzeugs parallel zu der gewählten Richtung vom Kalman-Filter als ein Beobachtungsdatenelement verwendet wird.

**5.** Verfahren nach einem der Ansprüche 1 bis 4, umfassend folgende Schritte

• Empfangen (102) von Funknavigationsdaten über Satellit,
• Bildkorrelieren (104) zwischen den Funknavigationsdaten über Satellit und Straßendaten, die in einem in dem Fahrzeug eingebauten Speicher gespeichert sind, so dass die Parameter, die sich auf die Geometrie und die Orientierung der Straße beziehen, erzeugt werden.

**6.** Verfahren nach Anspruch 5, wobei, wenn Funknavigationsdaten über Satelliten nicht empfangen werden können, der Korrelierungsschritt zwischen korrigierten Navigationsdaten, die aus einer vorangegangenen Durchführung des Korrekturschritts resultieren, und den von dem Speicher gespeicherten Straßendaten durchgeführt wird.

**7.** Rechnerprogrammprodukt, umfassend Programmcodebefehle für die Ausführung der Schritte des Verfahrens nach einem der Ansprüche 1 bis 6, wenn dieses Verfahren von mindestens einem Prozessor ausgeführt wird.

**8.** Vorrichtung (6) zum Schätzen von Navigationsdaten eines Landfahrzeugs, wobei die Vorrichtung umfasst:

• eine Empfangsschnittstelle (14) von Trägheitsdaten, die von mindestens einem Trägheitssensor erfasst werden, der in dem Landfahrzeug eingebaut ist,
• eine Empfangsschnittstelle (16) von Parametern, die sich auf die Geometrie und die Orientierung einer von dem Landfahrzeug befahrenen Straße beziehen,
• mindestens einen Prozessor (18), der ausgelegt ist, um:

◦ die Trägheitsdaten auf der Basis der Parameter zu integrieren, so dass Navigationsdaten des Fahrzeugs erzeugt werden, die mindestens eine vertikale Bewegung des Fahrzeugs in Bezug auf die Straße umfassen, gemessen parallel zu einer vertikalen Richtung, die senkrecht zu einer Oberfläche der Straße ist,
◦ mindestens einen Fehler zu schätzen, der die erzeugten Navigationsdaten verzerrt, durch Lösen eines Gleichungssystems, das die Hypothese aufstellt, dass die berechnete vertikale Bewegung einen Bewegungsfehler des Fahrzeugs parallel zur vertikalen Richtung darstellt,
◦ die erzeugten Navigationsdaten ausgehend von dem geschätzten Fehler zu korrigieren, so dass korrigierte Navigationsdaten erzeugt werden.

**9.** Vorrichtung (6) zum Schätzen von Navigationsdaten eines Landfahrzeugs, wobei die Vorrichtung umfasst:

• eine Empfangsschnittstelle (14) von Trägheitsdaten, die von mindestens einem Trägheitssensor erfasst werden, der in dem Landfahrzeug eingebaut ist,
• eine Empfangsschnittstelle (16) von Parametern, die sich auf die Geometrie und die Orientierung einer von dem Landfahrzeug befahrenen Straße beziehen, wobei die Parameter eine Breite (L) der Straße umfassen, gemessen gemäß einer transversalen Richtung (Yr), die senkrecht zu einer mittleren Fahrtrichtung (Xr) eines Landfahrzeugs auf der Straße ist,
• mindestens einen Prozessor (18), der ausgelegt ist, um:

◦ die Trägheitsdaten auf der Basis der Parameter zu integrieren, so dass Navigationsdaten des Fahrzeugs erzeugt werden, die mindestens eine transversale Bewegung des Fahrzeugs in Bezug auf die Straße umfassen, gemessen parallel zu der transversalen Richtung,
◦ eine Abweichung zwischen der berechneten transversalen Bewegung und einer zugeordneten Referenzbewegung mit einem vorher festgelegten Wert, der kleiner als oder gleich der Breite (L) der Straße ist, zu berechnen,
◦ mindestens einen Fehler zu schätzen, der die erzeugten Navigationsdaten verzerrt, durch Lösen eines Gleichungssystems, das die Hypothese aufstellt, dass die berechnete Abweichung einen Bewegungsfehler des Fahrzeugs parallel zur transversalen Richtung darstellt,
◦ die erzeugten Navigationsdaten ausgehend von dem geschätzten Fehler zu korrigieren, so dass korrigierte Navigationsdaten erzeugt werden.

**10.** System, das zum Einbau in ein Landfahrzeug bestimmt ist, umfassend:

• eine Trägheitszentrale (2), umfassend mindestens einen Trägheitssensor (3),
• eine Vorrichtung (6) nach Anspruch 8 oder Anspruch 9, die eingerichtet ist, um von Trägheitszentrale mittels des Trägheitssensors (3) erzeugte Trägheitsdaten zu empfangen.

11. System, das zum Einbau in ein Landfahrzeug bestimmt ist, umfassend:

• einen Speicher (8), der Straßendaten enthält,
• einen Empfänger, der ausgelegt ist, um Funknavigationsdaten über Satellit zu erfassen,
• eine Korrelationsvorrichtung (12), die ausgelegt ist, um eine Korrelation zwischen den Funknavigationsdaten über Satellit und den im Speicher (8) enthaltenen Straßendaten durchzuführen, so dass Parameter erzeugt werden, die sich auf die Geometrie und die Orientierung einer Straße beziehen,
• eine Vorrichtung nach Anspruch 8 oder Anspruch 9, die eingerichtet ist, um die Parameter zu empfangen, die von der Korrelationsvorrichtung erzeugt werden.

12. Landfahrzeug (1), umfassend eine Vorrichtung nach Anspruch 9 oder ein System nach einem der Ansprüche 10 und 11.

**Claims**

1. A method for estimating navigation data of a land vehicle, the method comprising the steps of:

• receiving inertial data (100) acquired by an inertial sensor on board the land vehicle,
• receiving parameters relating to the geometry and orientation of a road travelled by the land vehicle,
• integrating (106) the inertial data based on the parameters, so as to produce navigation data of the vehicle comprising at least one vertical movement of the vehicle measured parallel to a direction (Zr) perpendicular to a surface of the road,
• estimating (108) at least one error which affects the produced navigation data, by solving a system of equations assuming that the calculated vertical movement constitutes an error in the movement of the vehicle parallel to the vertical direction,
• correcting (110) the navigation data produced from the estimated error, so as to produce corrected navigation data.

2. A method for estimating navigation data of a land vehicle, the method comprising steps of:

• receiving inertial data (100) acquired by an inertial sensor on board the land vehicle,
• receiving parameters relating to the geometry and orientation of a road travelled by the land vehicle, the parameters comprising a width (L) of the road measured in a transverse direction (Yr) perpendicular to an average direction (Xr) of travel of a land vehicle on the road,
• integrating (106) the inertial data based on the parameters, so as to produce navigation data of the vehicle comprising at least one transverse movement of the vehicle relative to the road measured parallel to the transverse direction (Yr),
• calculating a difference between the calculated transverse movement and an associated reference movement having a predetermined value less than or equal to the width (L) of the road,
• estimating (108) at least one error which affects the produced navigation data, by solving a system of equations assuming that the calculated difference constitutes an error in the movement of the vehicle parallel to the transverse direction,
• correcting (110) the navigation data produced from the estimated error, so as to produce corrected navigation data.

3. The method according to claim 2, wherein the reference movement associated with the transverse movement is zero.

4. The method according to one of claims 1 to 3, wherein the estimation step is implemented by a Kalman filter, and the movement of the vehicle parallel to the selected direction is used by the Kalman filter as an observation data item.

5. The method according to one of claims 1 to 4, comprising steps of

• receiving (102) satellite radionavigation data,

• image correlation (104) implemented between the satellite radionavigation data and road data stored by a memory on board the vehicle, so as to produce the parameters relating to the geometry and orientation of the road.

6. The method according to claim 5, wherein, when satellite radionavigation data cannot be received, the correlation step is implemented between corrected navigation data resulting from a previous implementation of the correction step, and the route data stored by the memory.

7. A computer program product comprising program code instructions for the execution of the steps of the method according to one of claims 1 to 6, when this method is executed by at least one processor.

8. A device (6) for estimating navigation data of a land vehicle, the device comprising:

   • an interface (14) for receiving inertial data acquired by at least one inertial sensor on board the land vehicle,
   • an interface (16) for receiving parameters relating to the geometry and orientation of a road travelled by the land vehicle,
   • at least one processor (18) configured to:

      ◦ integrate the inertial data based on the parameters, so as to produce navigation data of the vehicle comprising at least one vertical movement of the vehicle relative to the road measured parallel to a vertical direction perpendicular to a surface of the road,
      ◦ estimate (108) at least one error which affects the produced navigation data, by solving a system of equations assuming that the calculated vertical movement constitutes an error in the movement of the vehicle parallel to the vertical direction,
      ◦ correct the navigation data produced from the estimated error, so as to produce corrected navigation data.

9. A device (6) for estimating navigation data of a land vehicle, the device comprising:

   • an interface (14) for receiving inertial data acquired by at least one inertial sensor on board the land vehicle,
   • an interface (16) for receiving parameters relating to the geometry and orientation of a road travelled by the land vehicle, the parameters comprising a width (L) of the road measured in a transverse direction (Yr) perpendicular to an average direction (Xr) of travel of a land vehicle on the road,
   • at least one processor (18) configured to:

      ◦ integrate (106) the inertial data based on the parameters, so as to produce navigation data of the vehicle comprising at least one transverse movement of the vehicle relative to the road measured parallel to the transverse direction,
      ◦ calculate a difference between the calculated transverse movement and an associated reference movement having a predetermined value less than or equal to the width (L) of the road,
      ◦ estimate at least one error which affects the produced navigation data, by solving a system of equations assuming that the calculated difference constitutes an error in the movement of the vehicle parallel to the transverse direction,
      ◦ correct the navigation data produced from the estimated error, so as to produce corrected navigation data.

10. A system intended to be on board a land vehicle, comprising:

   • an inertial unit (2) comprising at least one inertial sensor (3),
   • a device (6) according to claim 8 or claim 9 arranged to receive inertial data generated by the inertial unit by means of the inertial sensor (3).

11. The system intended to be on board a land vehicle, comprising:

   • a memory (8) containing route data,
   • a receiver configured to acquire satellite radionavigation data,
   • a correlation device (12) configured to implement a correlation between the satellite radionavigation data and the route data contained in the memory (8), so as to produce parameters relating to the geometry and orientation of a road,
   • a device according to claim 8 or claim 9, arranged to receive the parameters produced by the correlation device.

**EP 3 724 605 B1**

12. A land vehicle (1) comprising a device according to claim 9 or a system according to one of claims 10 and 11.

**15**

**FIG. 1a**

**FIG. 1b**

**FIG. 1c**

## FIG. 2

## FIG. 3

## RÉFÉRENCES CITÉES DANS LA DESCRIPTION

**Documents brevets cités dans la description**

- FR 2878954
- US 2017052261 A
- US 2002099481 A

**Littérature non-brevet citée dans la description**

- **SÉTRA.** *Comprendre les principaux paramètres de conception géométriques des routes,* 2006
- Applied Optimal Estimation. **KALMAN.** The Analytic Sciences Corporation. 1974